# EUROPEAN PATENT SPECIFICATION

(11) **EP 3 608 226 B1**
(45) Date of publication and mention of the grant of the patent: **03.01.2024**
(21) Application number: 19200006.5
(22) Date of filing: 15.11.2013
(51) Int. Cl.: B64D 11/02

(54) **TOILET ARRANGEMENT FOR A VEHICLE**
TOILETTENANORDNUNG FÜR EIN FAHRZEUG
AGENCEMENT DE TOILETTE POUR VÉHICULE

(43) Date of publication of application: 12.02.2020
(62) Divisional of application: 13193136.2
(73) Proprietor: Airbus Operations GmbH, 21129 Hamburg (DE)
(72) Inventor: Wiebalck, Jens, 21129 Hamburg (DE); Schliwa, Ralf, 21129 Hamburg (DE); Lange, Roland, 21129 Hamburg (DE)
(74) Representative: LKGLOBAL Lorenz & Kopf Patentanwalt Attorney at Law PartG mbB

(56) References cited:
- EP-B1- 2 914 492
- WO-A1-2012/110643
- WO-A1-2014/071413
- WO-A2-2011/101385

## Description

### TECHNICAL FIELD

The invention relates to a toilet arrangement for a vehicle. The invention specifically relates to a toilet arrangement for an aircraft, as well as a monument for a cabin of a vehicle and an aircraft with such a monument.

### BACKGROUND OF THE INVENTION

In the layout of passenger cabins in vehicles, one important objective frequently is the maximization of the available number of passenger seats that is limited by the number of mandatory seats for crew members, as well as mandatory safety devices, arbitrary service equipment and toilets. The proportion of the number of passenger seats to the remaining equipment in passenger cabins is a factor that co-determines the operating efficiency of an aircraft in scheduled air traffic. In addition to official regulations for the type certification and the operating permit of vehicles, the operators of the vehicles also need to take into account customer's needs such as, for example, customized special installations in the selection of seat sizes, seat spacings, service equipment and toilets. Depending on the design of fixtures in the passenger cabin and their space requirement, intelligent construction and configuration solutions can optimize the number of passenger seats.

For space reasons and lack of ulterior regulations, certain vehicles according to the prior art merely comprise standard toilets, but no separate toilets for persons with limited mobility. For example, it should be possible to enter such toilets that are also referred to as "handicapped toilets" below with a wheelchair. Handicapped toilets of this type require much more installation space and are scarce, particularly in aircraft, because they significantly reduce the operating efficiency of the aircraft in question and are only used very infrequently.

DE 43 00 877 A1 and US 5 474 260 A describe an aircraft with a series of service equipment and toilets that are designed in the form of independent conventional toilet compartments.

WO2012/110643A1 describes a modular cabin segment for a vehicle. The cabin segment comprises a first lateral segment module that accommodates a first toilet arrangement with at least one toilet compartment, and a second lateral segment module, wherein in each case an outer lateral face of the first segment module and of the second lateral segment module is designed to adapt in each case to an inner wall of a cabin of the vehicle so as to correspond to the aforesaid. The special feature of this cabin segment consists of at least one of the modules comprising at least one cabin attendant seat that on one side is held on the at least one module so that it can be pivoted on an axis. In this manner very good integration of many different functions in the manner of a construction kit is achieved in order to be able to accommodate a greater number of passenger seats elsewhere within the limited space provided in a cabin.

EP2914492, which is comprised in the state of the art according to Art. 54 (3) EPC, discloses a lavatory monument assembly that includes an enclosure having at least a front wall and that defines an enclosure interior, and a divider wall that extends rearwardly from the front wall. The divider wall includes a divider door that is movable between closed and open positions. In the closed position the divider door divides the enclosure interior into a first lavatory' interior and a second lavatory interior. The front wall includes a first and second lavatory doors that are each movable between closed and open positions and provide access to the first lavatory interior and second lavatory interiors respectively. The front wall also includes a vertically extending center post. The second lavatory door is hingedly connected to the center post, and the center post and the second lavatory door are slidable to a stowed position when the second lavatory door is in the open position.

### SUMMARY OF THE INVENTION

It is an object of the invention to provide a toilet arrangement for a vehicle that can be used by persons with limited mobility, but does not excessively restrict the operating efficiency of the vehicle.

A toilet arrangement for a vehicle, a monument for a cabin of a vehicle with such a toilet arrangement and an aircraft having such a monument with the features of the independent claims are disclosed. Advantageous embodiments and further improvements may be gathered from the subclaims and the following description.

The described exemplary embodiments likewise concern the toilet arrangement, the monument and the aircraft having such a monument. In other words, all features and improvements mentioned below, for example, with reference to the toilet arrangement, are also implementable for the use or in the aircraft and vice versa.

According to the invention, a toilet arrangement for a vehicle is proposed, which comprises:
- a first toilet compartment having a first opening, a first toilet compartment door for closing the first opening and a first toilet opposite to the first opening,
- an adjacent second toilet compartment having a second opening, a second toilet compartment door for closing the second opening and a second toilet opposite to the second opening,
- a forward dividing flap situated between the first toilet compartment and the second toilet compartment for at least partially dividing the first toilet compartment from the second toilet compartment, and
- an even front wall, wherein theforward dividing flap is rotatably supported at the front wall to separate the toilet compartments from each other or to form a combined toilet compartment, wherein the first toilet has a larger distance to the front wall than the second toilet, wherein the forward dividing flap is adapted for closing the first opening when the first toilet compartment door is retracted, wherein the first opening and the second opening are positioned in the same plane, wherein the size of the combined toilet compartment equals the sum of the sizes of the first and second toilet compartments, further comprising an upper rear dividing flap, which is rotatably supported in a region between the first toilet and the second toilet, wherein the upper rear dividing flap extends from a height above the first toilet to a ceiling region of the first toilet compartment and the second toilet compartment and wherein the upper rear dividing flap is adapted for at least partially separating the first toilet compartment from the second toilet compartment and for rotating to a position directly above the first toilet.

Hence, the toilet arrangement comprises two toilet compartments that are separated by at least the forward dividing flap, which is situated between the first and second toilet compartments. In case a person with reduced mobility desires to enter a toilet compartment through a wheelchair, the first door, which may be foldable, may be retracted to the side facing away from the second compartment. With the foldable door open, the first opening allows the person to enter the first toilet compartment. By moving the forward dividing flap through rotation around a rotational axis at the front wall, which rotational axis should be vertical to a floor on which the toilet arrangement is positioned, it may be used as a door for closing the first opening.

However, due to its rotation, the forward dividing flap does not separate the two toilet compartments anymore and the toilet arrangement according to the invention provides a single, but clearly larger toilet compartment. The size of the combined toilet compartment equals the sum of the sizes of the first and second toilet compartments.

A great advantage lies in the fact that the first toilet has a larger distance to the first opening, which allows a wheelchair to enter the first toilet compartment and allows a person to leave the wheelchair to reach the second toilet in the second toilet compartment. Due to the large available space, the wheelchair may completely remain in the first toilet compartment even when the first opening is closed by the forward dividing flap.

Closing the first opening by means of the forward dividing flap requires adequate locking means, which are able for holding the forward dividing flap in a closed position just as the first toilet compartment door. For this purpose, locking means of the first toilet compartment door may be adapted for engaging with locking means of the forward dividing flap, such that the forward dividing flap may provide a positive or non-positive connection with the first toilet compartment door when the forward dividing flap is swept forward to close the first opening. As an alternative, a part of the front wall or an additional component behind or in front of a support of the first toilet compartment door may comprise suitable locking means for providing an engagement with the forward dividing flap.

The front wall of the toilet arrangement is even. The first opening and the second opening therefore are positioned in the same plane and provide a harmonic, aesthetic appearance without any steps, protrusions, or edges extending into a free space of the vehicle. This is particularly useful for space efficient passenger cabins and allows passengers to pass the front wall in a short distance without having to pay attention for avoiding any protrusions or sharp edges if other passengers are standing next to the front wall and partially obstruct the available space.

In a preferred embodiment, the first toilet compartment and the second toilet compartment have a main direction of extension, which are parallel to each other. Hence, both toilet compartments primarily extend into the same direction and the wall, which extends along the largest length of at least the second toilet compartment, may at least partially be removed to combine the available space of the toilet compartments. Still further, as both toilet compartments extend into the same directions, they may constitute a separate lateral section of a larger cabin monument, which does not obstruct any adjacent lateral installation space for trolley compartments etc.

According to the invention, an upper rear dividing flap is rotatably supported in a region between the first toilet and the second toilet, wherein the upper rear dividing flap extends from a height above the first toilet to a ceiling region of the first and second toilet compartments and wherein the upper rear dividing flap is adapted for at least partially separating the first toilet compartment from the second toilet compartment and for rotating to a position directly above the first toilet. It is apparent, that the forward dividing flap, which is supported at the front wall, cannot extend along the whole wall between the first and second toilet compartment. Its dimensioning factor is the width of the first opening, as the forward dividing flap needs to be able to replace the first toilet compartment door. Hence, the remaining space in a height above an upper delimitation of the first and second toilet may at least partially be bridged by the rear division panel, which may be moved out of the way into a position directly above the first toilet. As described above, the person with reduced mobility would enter the first toilet compartment and would leave the wheelchair in this compartment directly in front of the first toilet. Consequently, the first toilet cannot be used by this person at all. Moving the upper rear dividing flap into a position directly above the first toilet therefore does not obstruct any usable component in this compartment. The upper rear dividing flap may comprise a lower edge, which ends 1 to 5 mm above an upper surface of the first toilet.

However, as the upper rear dividing flap does not extend from the ceiling of the first and second toilet compartment to the floor, a lower rear dividing flap is rotatably supported in a region between the first toilet and the second toilet and extends substantially from a floor of the first toilet compartment and the second toilet compartment to the upper rear dividing flap. A bottom portion of the wall between the first and the second toilet compartment may thereby be unobstructed by rotating the lower rear dividing flap to a position, in which the lower rear dividing flap preferably snugly aligns to the second toilet. Hence, the lower rear dividing flap should be rotated in a direction opposite to the direction of rotation of the upper rear dividing flap. Besides a clear guidance function for the person on the wheelchair this provides sufficient space to easily rotate the wheelchair, which has entered the first toilet compartment, into a position, in which the wheelchair touches the lower rear dividing flap. Thereby, a clear delimitation of the wheelchair's motion is given, and the second toilet may be protected from accidentally being hit by the wheelchair. Further, in the desired end position of the wheelchair, the person with reduced mobility may more easily reach the second toilet from the wheelchair.

Still further, a flexible sealing element may be arranged between the upper rear dividing flap or the lower rear dividing flap, wherein the sealing element may be fastened either to the upper rear dividing flap or to the lower rear dividing flap. However, it may be advantageous to fasten the sealing element to the upper rear dividing flap, such that it may be compressed when the upper rear dividing flap is rotated to a position above the first toilet. In this case, the sealing element may provide for temporary holding the upper rear dividing flap in this position.

As an alternative, the upper rear dividing flap may comprise locking means at an edge opposite to a rotational axis of the upper rear dividing flap, wherein the locking means is adapted for engaging corresponding locking means at a lateral or rear wall of the first toilet compartment. If the first and second toilet compartments are combined, the upper rear dividing flap may reliably be secured in its swept back position.

In an advantageous embodiment, the first toilet compartment comprises a vehicle attendant seat compartment, into which a vehicle attendant seat may be stowed in case it is not used. This may be conducted through a swivable seat supporting adapter on rails extending into the vehicle attendant seat compartment. Due to the fact that the first toilet has a larger distance to the first opening than the second toilet to the second opening, there is a relatively large space available to introduce such a compartment. For this purpose, an interior wall of the first toilet compartment may comprise a protrusion or an inwards directed shift, while at the outside of the first toilet compartment, the vehicle attendant seat compartment is located. Right next to this protrusion in a region between the protrusion and the first toilet, a wash basin may be arranged inside the first toilet compartment, which may extend into the interior of the first toilet compartment about the same measure as the protrusion. Consequently, a harmonic and aesthetic appearance is provided in the interior of the first toilet compartment despite the integration of such a non-toilet related function.

The invention also relates to a monument for a vehicle comprising a toilet arrangement and a galley section in a lateral arrangement. The galley section comprises a plurality of stowage compartments for exemplarily stowing trolleys. As none of the toilet compartments extends behind the galley section, there is no limitation in the available stowage depth for the galley section, such that also two or more trolleys may be stowed one behind each other.

In a preferred embodiment, the monument is adapted for being arranged directly in front of a pressure bulkhead in an aircraft cabin and for extending from a lateral fuselage wall to an opposite lateral fuselage wall. Due to its position directly in front of the pressure bulkhead, which approximately has the shape of a spherical cap, the available depth for components in the middle of the monument is exceeding the available depth on outer regions. Hence, the first toilet compartment may comprise a clearly larger extension than the second toilet compartment. This allows to shift the first toilet clearly further away from the first opening than would be possible with the second toilet relative to the second opening.

Finally, the invention relates to an aircraft having a passenger cabin and at least one toilet arrangement according to the above-mentioned features. Preferably, the aircraft comprises a pressurized passenger cabin with a pressure bulkhead, in front of which a monument having at least one such toilet arrangement is placed. Of course, it may also be possible to provide a monument having two such toilet arrangements in a mirror-inverted setup.

### BRIEF DESCRIPTION OF THE FIGURES

Other characteristics, advantages and potential applications of the present invention result from the following description of the exemplary embodiments illustrated in the figures. Furthermore, identical or similar objects are identified by the same reference symbols in the figures.
Fig. 1 shows a toilet arrangement in a cabin monument in a three-dimensional view.
Fig. 2 shows the toilet arrangement of Fig. 1 in a partial sectional view.
Figs. 3 to 6 show a person with limited mobility entering the toilet arrangement.
Fig. 7 shows the toilet arrangement of Fig. 6 without a person and wheelchair from another perspective.
Fig. 8 shows the toilet arrangement of Fig. 2 in another perspective.

### DETAILED DESCRIPTION OF EXEMPLARY EMBODIMENTS

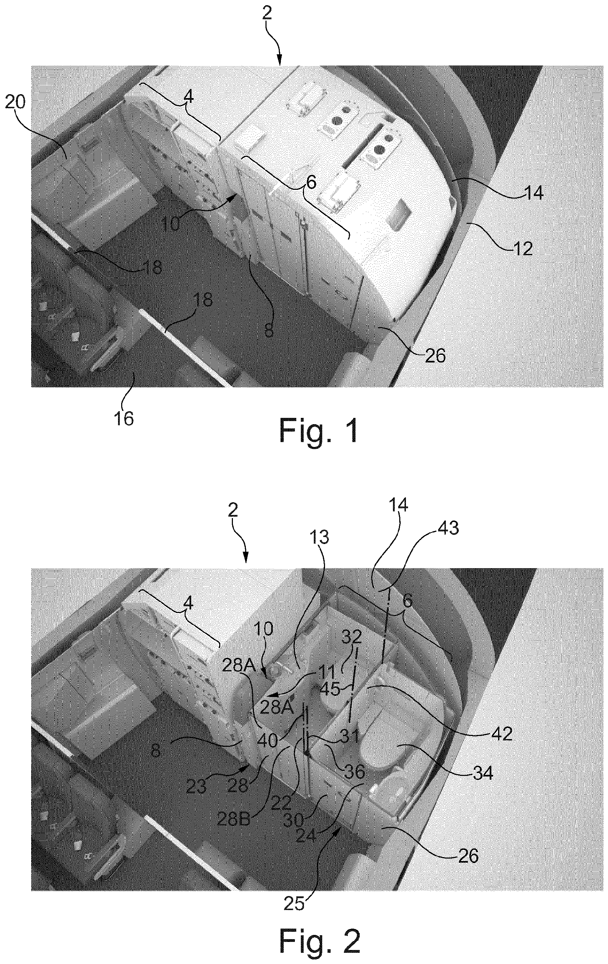

Figure 1 shows a monument 2 in a three-dimensional view, the monument 2 having a galley section 4 and a toilet arrangement 6 as well as a flight attendant seat 8, which is stowable in a flight attendant seat compartment 10. It is clearly apparent, that monument 2 is located at a rearmost position in an aircraft fuselage 12, directly in front of a pressure bulkhead 14, which has the shape of a spherical cap and defines a rear end of a pressurized passenger compartment 16.

In front of the monument 2, i.e. in-flight direction forward of monument 2, partition walls 18 are situated, which divide a passenger seating area from an exit area in the vicinity of an aircraft door 20. Here, passengers may stand while waiting for the toilet arrangement 6 to be available.

In Fig. 2, the same monument 2 is shown, wherein the toilet arrangement 6 is shown in a sectional view. Here, a first toilet compartment 22 is arranged in an inward position and a second toilet compartment 24 is arranged between the first toilet compartment 22 and an inner surface of the fuselage 12. The first toilet compartment 22 and the second toilet compartment 24 have a common front wall 26 with a first opening 23 and a second opening 25, which front wall 26 is substantially even, i.e. does not have steps, protrusions or different extensions in the direction of flight. Integrated into the front wall 26 a first toilet compartment door 28 and a second toilet compartment door 30 are arranged, which differ in their designs. The first toilet compartment door 28 is a bi-fold door, which comprises two lateral door sections 28a and 28b, while the second toilet compartment door 30 is a plane door with only one hinge.

Due to the arrangement at a rear section in front of the pressure bulkhead 14, the first toilet compartment 28 extends further against the direction of flight than the second toilet compartment 24. This makes possible to arrange a toilet 32 in the first toilet compartment 22 further rearward than a toilet 34 in the second toilet compartment 24. Besides allowing the flight attendant seat compartment 10 to extend into the installation space of the first toilet compartment 22, it allows to combine the first toilet compartment 22 and the second toilet compartment 24 in order to allow a disabled person to enter the combined toilet compartment as described with the following figures. For providing enough space for the vehicle attendant seat stowage compartment 10, the first toilet compartment 22 comprises a protrusion 11, which corresponds to the width of the vehicle attendant seat stowage compartment 10. Behind protrusion 11, i.e. against the direction of flight, a wash basin 13 is arranged, which comprises an installation depth that substantially corresponds to the protrusion 11.

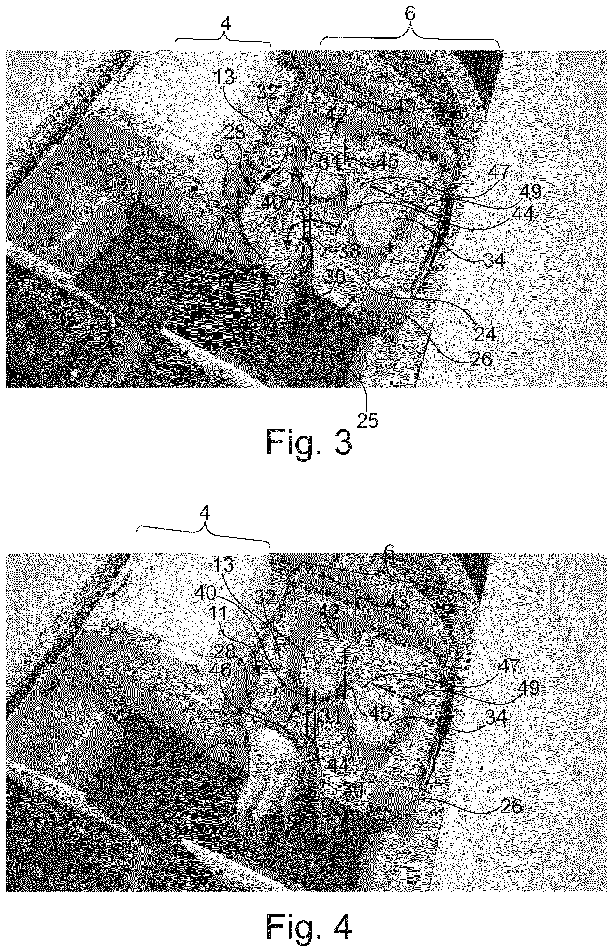

In Fig. 3, a forward dividing flap 36, which at least partially divides the first toilet compartment 22 from the second toilet compartment 24, is swivelled from a closed position to an open position. The dividing flap 36 therefore is supported on a hinge 38, which allows swivelling, i.e., rotating, the forward dividing flap 36 around a substantial vertical hinge axis 40.

For not obstructing the first toilet compartment 22, the first toilet compartment door 28 is folded to rest against the wall at the flight attendant seat compartment 10, i.e. opposite to the hinge 38. Also, the second toilet compartment door 30 is opened through rotation around a substantial vertical rotational axis 31, which is parallel and adjacent to the rotational axis 40.

Further, an upper rear dividing flap 42, which is arranged between the first toilet 32 and the second toilet 34, is swivelled from a closed position to an open position around a substantial rotational axis 43, which is arranged between the first toilet 32 and the second toilet 34. The upper rear dividing flap 42 extends from a height just above the first toilet 32 to a ceiling region of the first and second toilet compartments 22, 24. By swivelling the upper rear dividing flap 42 into an open position, it extends directly into a position above the first toilet 32, which is not needed when the first and second toilet compartments 22, 24 are combined to a common compartment.

In a lower section between the first toilet 32 and the second toilet 34, a lower rear dividing flap 44 is located, which is swivelled from a closed position to a position around a substantial vertical rotational axis 45, until it reaches a position just adjacent to the second toilet 34. The lower rear dividing flap 44 snugly fits the second toilet 34 and provides a maximum possible, unobstructed space inside the first and second toilet compartments 22 and 24. Further, it provides a clear guidance to a person on a wheelchair 46 about how much the wheelchair 46 may be rotated.

As Fig. 4 shows, a disabled person on a wheelchair 46 may enter the first toilet compartment 22 through the space between the folded first toilet compartment door 28 and the forward swept forward dividing flap 36.

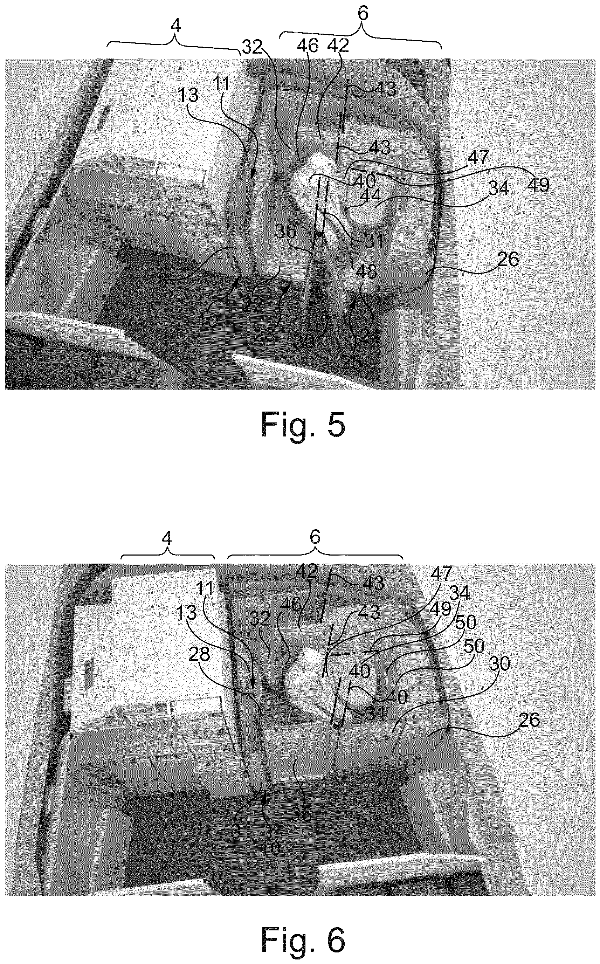

Apparent from Fig. 5, the wheelchair 46 may be turned around a vertical axis after completely entering the first toilet compartment 22. This is possible, as the rearward shifted first toilet 32 leaves sufficient available space. During the rotation, the wheelchair 46 assumes a substantially diagonal position, in which a side of the wheelchair 46 comes into contact with the lower rear dividing flap 44, which rests against the second toilet 34. At this position, a front end 48 of the wheelchair 46 extends into the second toilet compartment 24.

After entering the first toilet compartment 22 and conducting the above shown rotation, the forward dividing panel 36 is swept back in a manner, that it closes the opening of the first toilet compartment 22 and rests against the folded first toilet compartment door 28, as shown in Fig. 6. Further, the second toilet compartment door 30 is closed. Consequently, the first and second toilet compartment 22 and 24 are not divided from each other and the person sitting on the wheelchair 46 may easily reach the second toilet 34 and the person will have enough space to just leave the wheelchair 46 in its position.

For the purpose of improving the movability of the person, handles 50 are present inside the second toilet compartment 24.

Due to the clever arrangement of the first and second toilets 32 and 34 in a longitudinally shifted alignment, an improved toilet arrangement 6 is provided. Further, the galley section 4 may extend along the whole lateral and longitudinal installation space such that an increased number of trolleys may be stored in the galley section 4.

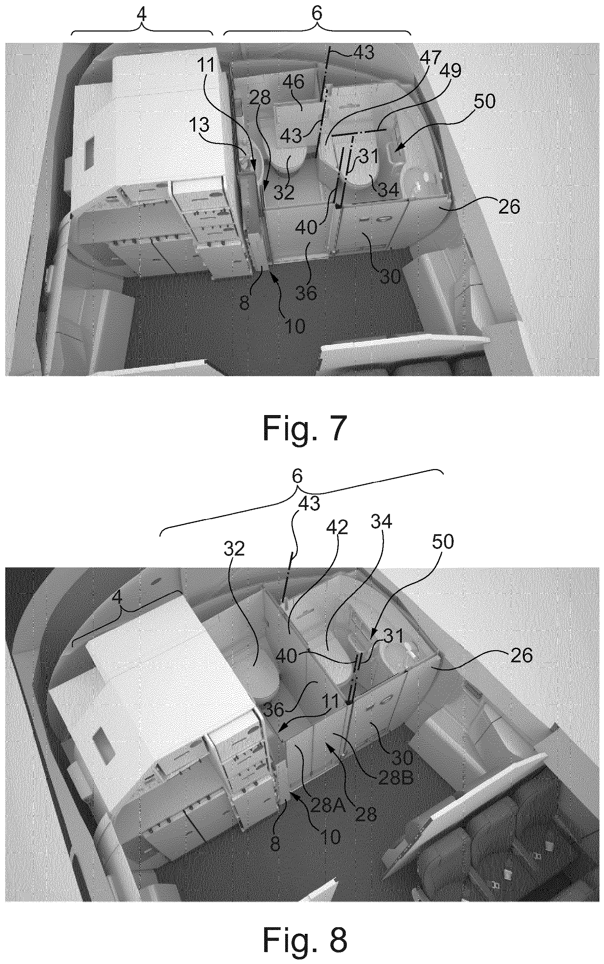

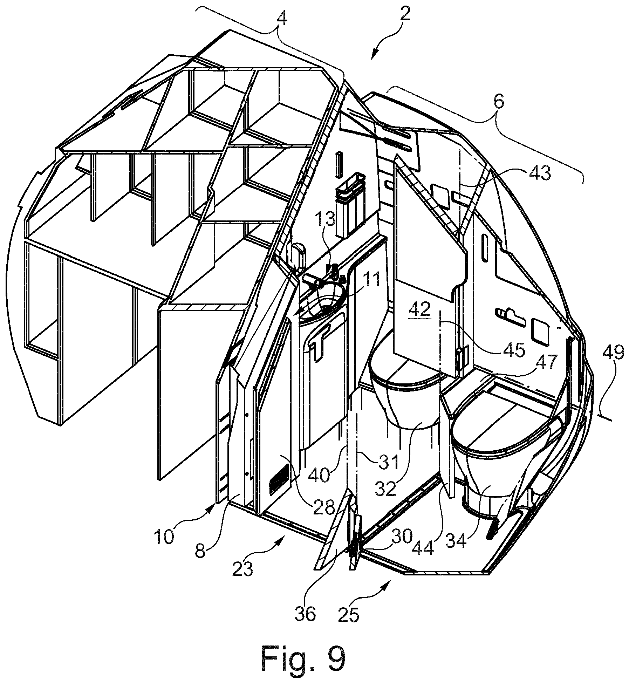

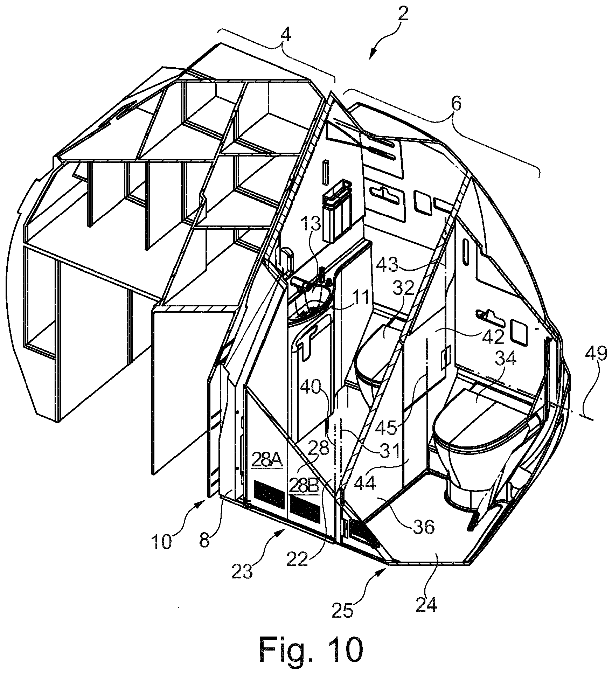

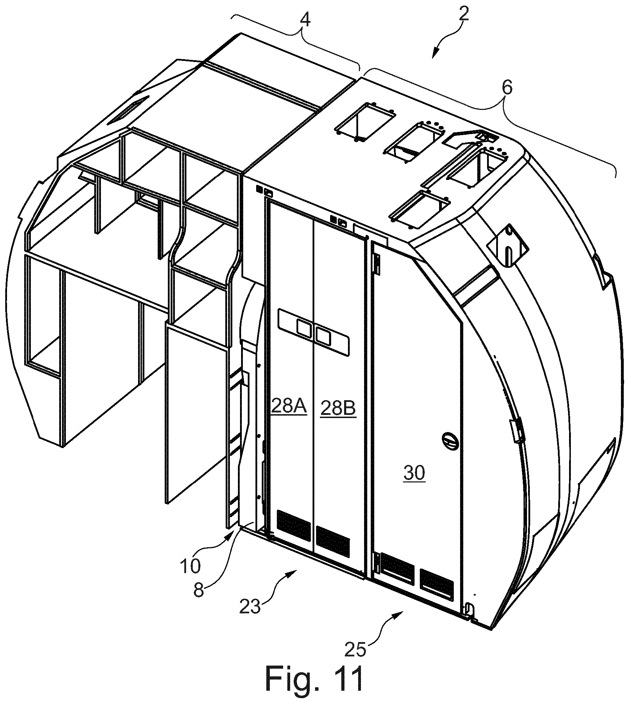

In Figs. 7 and 8, the monument 2 is shown from another viewing angle with an open upper division panel and an open lower division panel in a combined (disabled) mode (Fig. 7) and in a normal mode, where the first toilet compartment 22 and the second toilet compartment 24 are separate (Fig. 8).

As a supplement, it should be noted that "comprising" does not exclude any other elements or steps, and that "a" or "an" does not exclude a plurality. Reference symbols in the claims should not be interpreted in a restrictive sense.

## Claims

1. A toilet arrangement (6) for a vehicle, comprising
- a first toilet compartment (22) having a first opening (23), a first toilet compartment door (28) for closing the first opening (23) and a first toilet (32) opposite to the first opening (23),
- an adjacent second toilet compartment (24) having a second opening (25), a second toilet compartment door (30) for closing the second opening (25) and a second toilet (34) opposite to the second opening (25),
- a forward dividing flap (36) situated between the first toilet compartment (22) and the second toilet compartment (24) for at least partially dividing the first toilet compartment (22) from the second toilet compartment (24), and
- an even front wall (26),
wherein the forward dividing flap (36) is rotatably supported at the front wall (26) to separate the toilet compartments (22, 24) from each other or to form a combined toilet compartment,
wherein the first toilet (32) has a larger distance to the front wall (26) than the second toilet (34),
wherein the forward dividing flap (36) is adapted for closing the first opening (23) when the first toilet compartment door (28) is retracted,
wherein the first opening (23) and the second opening (25) are positioned in the same plane,
wherein the size of the combined toilet compartment equals the sum of the sizes of the first and second toilet compartments (22, 24),
further comprising an upper rear dividing flap (42), which is rotatably supported in a region between the first toilet (32) and the second toilet (34),
wherein the upper rear dividing flap (42) extends from a height above the first toilet (32) to a ceiling region of the first toilet compartment (22) and the second toilet compartment (24) and
wherein the upper rear dividing flap (42) is adapted for at least partially separating the first toilet compartment (22) from the second toilet compartment (24) and for rotating to a position directly above the first toilet (32).

2. Toilet arrangement (6) according to claim 1,
wherein the first toilet compartment door (28) is retractable to a side facing away from the dividing flap (36).

3. The toilet arrangement (6) of claim 1 or 2,
wherein the first compartment door (28) is a bi-fold door.

4. The toilet arrangement (6) of any of the preceding claims,
wherein the first toilet compartment (22) and the second toilet compartment (24) have a main direction of extension, which are parallel to each other.

5. The toilet arrangement (6) of any of the previous claims,
further comprising a lower rear dividing flap (44), which is rotatably supported in a region between the first toilet (32) and the second toilet (34) and extends substantially from a floor of the first toilet compartment (22) and the second toilet compartment (24) to the upper rear dividing flap (42).

6. The toilet arrangement (6) of any of the previous claims,
further comprising a flexible sealing element arrangeable between the upper rear dividing flap (42) and the lower rear dividing flap (44),
wherein the sealing element is fastened either to the upper rear dividing flap (42) or to the lower rear dividing flap (44).

7. The toilet arrangement (6) of any of the previous claims,
wherein the upper rear dividing flap (42) comprises locking means at an edge opposite to a rotational axis (43) of the upper rear dividing flap (42),
wherein the locking means is adapted for engaging corresponding locking means at a lateral or rear wall of the first toilet compartment (22).

8. The toilet arrangement (6) of any of the previous claims,
further comprising a vehicle attendant seat compartment (10) at the first toilet compartment (22), into which a vehicle attendant seat (8) is stowable in case it is not used.

9. A monument (2) for a vehicle comprising at least one toilet arrangement (6) according to any of the previous claims.

10. The monument (2) of claim 9, further comprising a galley section (4) in a lateral arrangement with the toilet arrangement (6).

11. The monument (2) of claim 9 or 10,
wherein the monument (2) is adapted for being arranged directly in front of a pressure bulkhead (14) in a passenger cabin (16) and for extending between two opposed lateral fuselage walls (12).

12. An aircraft having a passenger cabin and at least one toilet arrangement (6) according to any of the claims 1 to 8.

13. The aircraft of claim 12, wherein the toilet arrangement (6) is arranged in a monument (2) of any of the claims 9 to 11.

14. The aircraft of claim 12 or 13,
further comprising a pressure bulkhead (14), wherein the toilet arrangement (6) is positioned directly in front of the pressure bulkhead (14).

## Patentansprüche

1. Toilettenanordnung (6) für ein Fahrzeug, umfassend
- einen ersten Toilettenraum (22) mit einer ersten Öffnung (23), einer ersten Toilettenraumtür (28) zum Schließen der ersten Öffnung (23) und einer ersten Toilette (32) gegenüber der ersten Öffnung (23),
- einen angrenzenden zweiten Toilettenraum (24) mit einer zweiten Öffnung (25), einer zweiten Toilettenraumtür (30) zum Schließen der zweiten Öffnung (25) und einer zweiten Toilette (34) gegenüber der zweiten Öffnung (25),
- eine vordere Trennklappe (36), die sich zwischen dem ersten Toilettenraum (22) und dem zweiten Toilettenraum (24) befindet, um den ersten Toilettenraum (22) zumindest teilweise von dem zweiten Toilettenraum (24) abzutrennen, und
- eine glatte Vorderwand (26),
wobei die vordere Trennklappe (36) an der Vorderwand (26) drehbar gelagert ist, um die Toilettenräume (22, 24) voneinander abzutrennen oder einen kombinierten Toilettenraum auszubilden,
wobei die erste Toilette (32) einen größeren Abstand zur Vorderwand (26) als die zweite Toilette (34) aufweist, wobei die vordere Trennklappe (36) zum Schließen der ersten Öffnung (23) ausgelegt ist, wenn die erste Toilettenraumtür (28) zurückgezogen wird,
wobei die erste Öffnung (23) und die zweite Öffnung (25) in derselben Ebene angeordnet sind,
wobei die Größe des kombinierten Toilettenraums der Summe der Größen des ersten und zweiten Toilettenraums (22, 24) entspricht,
ferner umfassend eine obere hintere Trennklappe (42), die in einem Bereich zwischen der ersten Toilette (32) und der zweiten Toilette (34) drehbar gelagert ist,
wobei sich die obere hintere Trennklappe (42) von einer Höhe über der ersten Toilette (32) zu einem Deckenbereich des ersten Toilettenraums (22) und des zweiten Toilettenraums (24) erstreckt und
wobei die obere hintere Trennklappe (42) dazu angepasst ist, den ersten Toilettenraum (22) mindestens teilweise von dem zweiten Toilettenraum (24) abzutrennen und in eine Stellung direkt über der ersten Toilette (32) zu drehen.

2. Toilettenanordnung (6) nach Anspruch 1,
wobei die erste Toilettenraumtür (28) zu einer von der Trennklappe (36) abgewandten Seite zurückziehbar ist.

3. Toilettenanordnung (6) nach Anspruch 1 oder 2,
wobei die erste Raumtür (28) eine zweifach faltbare Tür ist.

4. Toilettenanordnung (6) nach einem der vorhergehenden Ansprüche,
wobei der erste Toilettenraum (22) und der zweite Toilettenraum (24) eine Hauptausdehnungsrichtung aufweisen, die parallel zueinander verlaufen.

5. Toilettenanordnung (6) nach einem der vorhergehenden Ansprüche,
ferner umfassend eine untere hintere Trennklappe (44), die in einem Bereich zwischen der ersten Toilette (32) und der zweiten Toilette (34) drehbar gelagert ist und sich im Wesentlichen von einem Fußboden des ersten Toilettenraums (22) und des zweiten Toilettenraums (24) bis zur oberen hinteren Trennklappe (42) erstreckt.

6. Toilettenanordnung (6) nach einem der vorhergehenden Ansprüche,
ferner umfassend ein flexibles Dichtungselement, das zwischen der oberen hinteren Trennklappe (42) und der unteren hinteren Trennklappe (44) anordenbar ist,
wobei das Dichtungselement entweder an der oberen hinteren Trennklappe (42) oder an der unteren hinteren Trennklappe (44) befestigt ist.

7. Toilettenanordnung (6) nach einem der vorhergehenden Ansprüche,
wobei die obere hintere Trennklappe (42) ein Verriegelungsmittel an einer Kante gegenüber einer Drehachse (43) der oberen hinteren Trennklappe (42) umfasst,
wobei das Verriegelungsmittel dazu angepasst ist, mit entsprechenden Verriegelungsmitteln an einer Seiten- oder Rückwand des ersten Toilettenraums (22) in Eingriff zu treten.

8. Toilettenanordnung (6) nach einem der vorhergehenden Ansprüche,
ferner umfassend einen Fahrzeugbegleitersitzraum (10) an dem ersten Toilettenraum (22), in dem ein Fahrzeugbegleitersitz (8) bei Nichtgebrauch verstaubar ist.

9. Monument (2) für ein Fahrzeug, umfassend mindestens eine Toilettenanordnung (6) nach einem der vorhergehenden Ansprüche.

10. Monument (2) nach Anspruch 9, ferner umfassend einen Bordküchenabschnitt (4) in einer seitlichen Anordnung mit der Toilettenanordnung (6).

11. Monument (2) nach Anspruch 9 oder 10,
wobei das Monument (2) dazu angepasst ist, direkt vor einer Druckschottwand (14) in einer Passagierkabine (16) angeordnet zu werden und sich zwischen zwei gegenüberliegenden seitlichen Rumpfwänden (12) zu erstrecken.

12. Luftfahrzeug mit einer Passagierkabine und mindestens einer Toilettenanordnung (6) nach einem der Ansprüche 1 bis 8.

13. Luftfahrzeug nach Anspruch 12, wobei die Toilettenanordnung (6) in einem Monument (2) nach einem der Ansprüche 9 bis 11 angeordnet ist.

14. Luftfahrzeug nach Anspruch 12 oder 13,
ferner umfassend eine Druckschottwand (14), wobei die Toilettenanordnung (6) direkt vor der Druckschottwand (14) angeordnet ist.

## Revendications

1. Agencement de toilettes (6) pour un véhicule, comprenant
- un premier compartiment de toilettes (22) ayant une première ouverture (23), une porte de premier compartiment de toilettes (28) pour fermer la première ouverture (23) et une première toilette (32) opposée à la première ouverture (23),
- un second compartiment de toilettes adjacent (24) ayant une seconde ouverture (25), une porte de second compartiment de toilettes (30) pour fermer la seconde ouverture (25) et une seconde toilette (34) opposée à la seconde ouverture (25),
- un volet de séparation avant (36) situé entre le premier compartiment de toilettes (22) et le second compartiment de toilettes (24) pour séparer au moins en partie le premier compartiment de toilettes (22) du second compartiment de toilettes (24), et
- une paroi avant (26) plate,
le volet de séparation avant (36) étant supporté de manière rotative au niveau de la paroi avant (26) pour séparer les compartiments de toilettes (22, 24) l'un de l'autre ou pour former un compartiment de toilettes combiné,
la première toilette (32) étant plus éloignée de la paroi avant (26) que la seconde toilette (34),
le volet de séparation avant (36) étant prévu pour fermer la première ouverture (23) lorsque la porte de premier compartiment de toilettes (28) est rétractée,
la première ouverture (23) et la seconde ouverture (25) étant positionnées sur le même plan,
la taille du compartiment de toilettes combiné étant égale à la somme des tailles des premier et second compartiments de toilettes (22, 24),
comprenant en outre un volet de séparation arrière supérieur (42) qui est supporté de manière rotative dans une région entre la première toilette (32) et la seconde toilette (34),
le volet de séparation arrière supérieur (42) s'étendant depuis une hauteur au-dessus de la première toilette (32) jusqu'à une région du plafond du premier compartiment de toilettes (22) et du second compartiment de toilettes (24) et
le volet de séparation arrière supérieur (42) étant prévu pour séparer au moins en partie le premier compartiment de toilettes (22) du second compartiment de toilettes (24) et pour tourner dans une position directement au-dessus de la première toilette (32).

2. Agencement de toilettes (6) selon la revendication 1,
la porte de premier compartiment de toilettes (28) étant rétractable vers un côté opposé au volet de séparation (36) .

3. Agencement de toilettes (6) selon la revendication 1 ou 2,
la porte de premier compartiment (28) étant une porte pliante à deux battants.

4. Agencement de toilettes (6) selon l'une quelconque des revendications précédentes,
le premier compartiment de toilettes (22) et le second compartiment de toilettes (24) ayant des directions d'étendue principales qui sont parallèles l'une à l'autre.

5. Agencement de toilettes (6) selon l'une quelconque des revendications précédentes,
comprenant en outre un volet de séparation arrière inférieur (44) qui est supporté de manière rotative dans une région entre la première toilette (32) et la seconde toilette (34) et qui s'étend sensiblement depuis un plancher du premier compartiment de toilettes (22) et du second compartiment de toilettes (24) jusqu'au volet de séparation arrière supérieur (42).

6. Agencement de toilettes (6) selon l'une quelconque des revendications précédentes,
comprenant en outre un élément d'étanchéité flexible pouvant être disposé entre le volet de séparation arrière supérieur (42) et le volet de séparation arrière inférieur (44),
l'élément d'étanchéité étant attaché soit au volet de séparation arrière supérieur (42) soit au volet de séparation arrière inférieur (44).

7. Agencement de toilettes (6) selon l'une quelconque des revendications précédentes,
le volet de séparation arrière supérieur (42) comprenant un moyen de verrouillage au niveau d'un bord opposé à un axe de rotation (43) du volet de séparation arrière supérieur (42),
le moyen de verrouillage étant prévu pour venir en prise avec un moyen de verrouillage correspondant au niveau d'une paroi latérale ou arrière du premier compartiment de toilettes (22).

8. Agencement de toilettes (6) selon l'une quelconque des revendications précédentes,
comprenant en outre un compartiment de siège pour un personnel de bord (10) au niveau du premier compartiment de toilettes (22), dans lequel un siège pour un personnel de bord (8) peut être rangé lorsqu'il n'est pas utilisé.

9. Structure (2) pour un véhicule comprenant au moins un agencement de toilettes (6) selon l'une quelconque des revendications précédentes.

10. Structure (2) selon la revendication 9, comprenant en outre une section de cuisine (4) agencée latéralement par rapport à l'agencement de toilettes (6).

11. Structure (2) selon la revendication 9 ou 10,
la structure (2) étant prévue pour être disposée directement devant une cloison pressurisée (14) dans une cabine de passagers (16) et pour s'étendre entre deux parois latérales opposées (12) du fuselage.

12. Aéronef ayant une cabine de passagers et au moins un agencement de toilettes (6) selon l'une quelconque des revendications 1 à 8.

13. Aéronef selon la revendication 12, l'agencement de toilettes (6) étant disposé dans une structure (2) selon l'une quelconque des revendications 9 à 11.

14. Aéronef selon la revendication 12 ou 13, comprenant en outre une cloison pressurisée (14), l'agencement de toilettes (6) étant positionné directement devant la cloison pressurisée (14).
